# EUROPÄISCHE PATENTANMELDUNG

(11) **EP 0 830 977 A1**
(43) Veröffentlichungstag der Anmeldung: **25.03.1998**
(21) Anmeldenummer: 96115017.4
(22) Anmeldetag: 19.09.1996
(51) Int. Cl.: B60P 7/00, B65D 85/48

(54) **Vorrichtung zum seitlichen Abstützen von hochkant auf einem Boden eines Transportgestells aufzustellenden Platten**

(71) Anmelder: Jenkner, Erwin, D-71083 Herrenberg-Oberjesingen (DE)
(72) Erfinder: Jenkner, Erwin, D-71083 Herrenberg-Oberjesingen (DE)
(74) Vertreter: Becker, Maria, Dipl.-Phys.

(57) **Zusammenfassung**

Ein Transportgestell (Palette oder Transportwagen) ist zumindest an einem aufrechten Gestellteil (12) mit in wenigstens einer horizontalen Reihe nebeneinander angeordneten Abstandshaltern (20) ausgestattet, die vom Gestellteil (12) senkrecht abragen. Die Abstandshalter (20) definieren zwischen sich Platteneingriffsspalte (34), die sich, ausgehend von ihrem offenen Spaltende, nach innen kontinuierlich verengen. Dadurch lassen sich auf dem Boden (10) des Transportgestells aufzustellende Platten (36, 37) unterschiedlichster Dicke mit einem Plattenrandstück (36' bzw. 37') zwischen den Abstandshaltern (20) kippsicher stabilisieren, ohne daß entsprechend den unterschiedlichen Plattendicken der gegenseitige Abstand der Abstandshalter (20) verändert werden muß.

## Beschreibung

Die Erfindung betrifft eine Vorrichtung zum seitlichen Abstützen von hochkant auf einem Boden eines Transportgestells aufzustellenden Platten mit den Merkmalen des Oberbegriffs von Patentanspruch 1.

Vorrichtungen dieser Art sind bekannt. Bei einer solchen Konstruktion gemäß DE-GM 94 00 411.0 U1 sind hierbei die ein Plattenrandstück, in diesem Falle das Randstück einer Glasplatte, zur seitlichen Abstützung zwischen sich aufnehmenden Abstandshalter durch jeweils ein Paar von zueinander parallelen Flachprofilen gebildet. Mit ihrem einen Profilende sind sie auf einer Lagerhülse unverdrehbar befestigt, die auf einer Horizontalschiene des aufrechten Gestellteils verschiebbar und feststellbar angeordnet ist. Der gegenseitige Abstand einander benachbarter Abstandshalter ist hierbei jeweils manuell auf die Dicke von zu transportierenden Glasscheiben einzustellen, um zu vermeiden, daß diese bei ihrem Transport durch zu starkes Kippen in seitlicher Richtung zu Bruch gehen können.

Eine ähnliche Vorrichtung ist bei einem Transportwagen für Plattenmaterial gemäß DE-GM 295 06 073.5 vorgesehen.

Hier sitzen auf einer am aufrechten Gestellteil horizontal befestigten Plattenhalteleiste fingerartige Plattenseitenanschläge (Abstandshalter), die, um eine Abstandsänderung für. Platten anderer Dicke zu erreichen, von der Plattenhalteleiste abzuschrauben und gegen solche mit entsprechend anderem Durchmesser zu ersetzen sind. Alternativ hierzu kann die Plattenhalteleiste auch gegen andere Plattenleisten mit entsprechend geändertem Seitenabstand ihrer Plattenseitenanschläge ausgetauscht werden.

Beide bekannten Plattenabstützvorrichtungen erfordern somit für jede Dicke von zu transportierendem Plattenmaterial ein umständliches und zeitaufwendig durchzuführendes Neueinstellen des gegenseitigen Abstandes ihrer Plattenseitenanschläge bzw. Abstandshalter.

Der Erfindung liegt die Aufgabe zugrunde, eine Vorrichtung der im Oberbegriff des Anspruchs 1 erläuterten Art derart zu verbessern, daß sich zwischen ihren Abstandshaltern Plattenmaterial unterschiedlichster Dicke seitlich abstützen läßt, ohne daß hierzu eine dem Dickenmaß des Plattenmaterials anzupassende Veränderung der gegenseitigen Zuordnung der Abstandshalter erforderlich ist.

Diese Aufgabe wird erfindungsgemäß durch die kennzeichnenden Merkmale des Anspruches 1 gelöst.

Durch die erfindungsgemäß gewählte, spezielle gegenseitige Zuordnung der zwischen sich ein Randstück des Plattenmaterials zur seitlichen Plattenabstützung aufnehmenden Seitenabstandshalter werden zwischen diesen sich nach außen öffnende Platteneingriffsspalte geschaffen. Dadurch besteht die Möglichkeit, auf dem Transportgestell Plattenmaterial kippsicher zu stabilisieren, dessen Dicke über einen relativ großen Bereich variieren kann. Dabei bietet die Erfindung den Vorteil, nunmehr auf dem Transportgestell gleichzeitig Plattenmaterial verschiedenster Dicke bei gleich zueinander beabstandeten Abstandshaltern hochkant seitlich stabilisiert aufzustellen, wobei jeweils ein spielfreier Eingriff entsprechender, sich vertikal erstreckender Plattenrandstücke zwischen den Abstandshaltern gewährleistet ist.

Sofern hierbei die Zuordnung der einander benachbarten Seiten der Abstandshalter gemäß Anspruch 2 getroffen ist, wird ein weiterer, wesentlicher Vorteil insofern erreicht, als dann die stabilisierten Plattenrandstücke mit den zueinander konvergierenden Seiten benachbarter Abstandshalter beidseitig lediglich noch kantenseitige Berührung haben. Dies ist insbesondere wichtig, sofern es sich beispielsweise um Plattenmaterial mit hochempfindlicher Beschichtung handelt. Bei während des Plattentransports auftretenden, unvermeidlichen Erschütterungen ist so sichergestellt, daß trotz spielfreier Plattenabstützung am zwischen den Abstandshaltern stabilisierten Plattenrandstücken keine flächenhafte Berührung bzw. Beschädigung ihrer Beschichtung erfolgen kann.

Die Abstandshalter sind vorteilhaft durch Formteile aus Kunststoff gebildet, die an ihren zueinander benachbarten Seiten gegebenenfalls noch eine geeignete Weichbeschichtung aufweisen können. Die die Platteneingriffsspalte definierenden Seiten der Abstandshalter können beispielsweise konvex gekrümmt sein. Bevorzugt wird jedoch eine Konstruktion der Abstandshalter nach Anspruch 3, wobei es günstig ist, diese gemäß Anspruch 4 zu gestalten. In diesem Falle erhalten die Abstandshalter Spitzkeilform, wobei deren Seitenflächen dann jeweils eine ebene Plattenabstützfläche bilden können.

Eine weitere, zweckmäßige Ausbildung der Abstandshalter ist Gegenstand des Anspruches 5. Bei beiden möglichen Konstruktionsvarianten ist es dabei günstig, gemäß Anspruch 6 die Abstütz- bzw. U-Schenkel der Abstandshalter am freien Ende abzurunden, um ein anstoßfreies Einführen von Plattenrandstücken zwischen diese sicherzustellen.

In weiterer Ausgestaltung der Erfindung ist es vorteilhaft, die Anordnung der Abstandshalter am aufrechten Gestellteil gemäß Anspruch 7 vorzusehen, um für geforderte Plattendicken notwendige Abstände der Abstandshalter, insbesondere in einer Ausbildung gemäß Anspruch 4, zu erhalten.

Zweckmäßige Befestigungsmöglichkeiten für Abstandshalter und diese tragendenden Befestigungsschienen sind dabei Gegenstand der Ansprüche 8 bis 11.

Bevorzugt findet dabei eine Anordnung von Abstandshaltern am aufrechten Gestellteil gemäß den Ansprüchen 12 und 13 Anwendung, wodurch sich eines der vertikalen Plattenrandstücke sowie das auf dem Gestellboden ? Plattenmaterial auf dem Transportgestell besonders sicher fixieren läßt. ... gemäß Anspruch 4 vorzusehen, so daß diesen in abgesenktem Zustand beim Einschieben von Plattenmaterial zwischen die Abstandshalter am aufrechten Gestellteil zunächst keine Beachtung zu schenken ist.

In der Zeichnung ist schematisch und stark vereinfacht ein Ausführungsbeispiel der Erfindung dargestellt. Es zeigen:
- Figur 1: eine schaubildliche Darstellung des lediglich teilweise gezeigten Transportgestells,
- Figur 2: eine der Figur 1 entsprechende Darstellung, wobei jedoch das Transportgestell mit auf diesem hochkant abgestelltem seitlich abgestütztem Plattenmaterial bestückt ist,
- Figur 3: einzelne Abstandshalter des Transportgestells zum seitlichen Abstützen des Plattenmaterials, in schaubildlicher Darstellung.

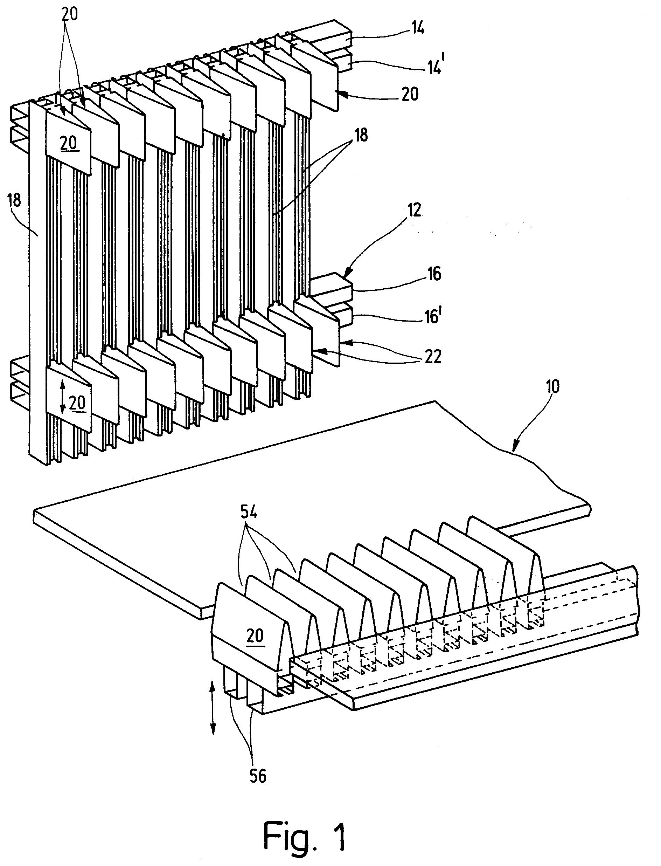

In Figur 1 sind einfachheitshalber lediglich ein Boden 10 sowie Komponenten eines sich von diesem längs der hinteren Bodenlängsseite erstreckenden, aufrechten Gestellteils 12 dargestellt. Der hintere Gestellteil 12 weist beispielsweise zwei Paare von oberhalb des Bodens 10 und parallel zu diesem in gegenseitigem Abstand angeordnete Aufnahmeleisten 14, 14' bzw. 16, 16' auf. An diesen ist eine Vielzahl von sich vertikal erstreckenden Befestigungsschienen 18 gehalten. Diese sind in Längsrichtung der Aufnahmeleisten 14, 14', 16, 16' stufenlos verstellbar und feststellbar vorgesehen, was weiter unten im einzelnen erläutert wird.

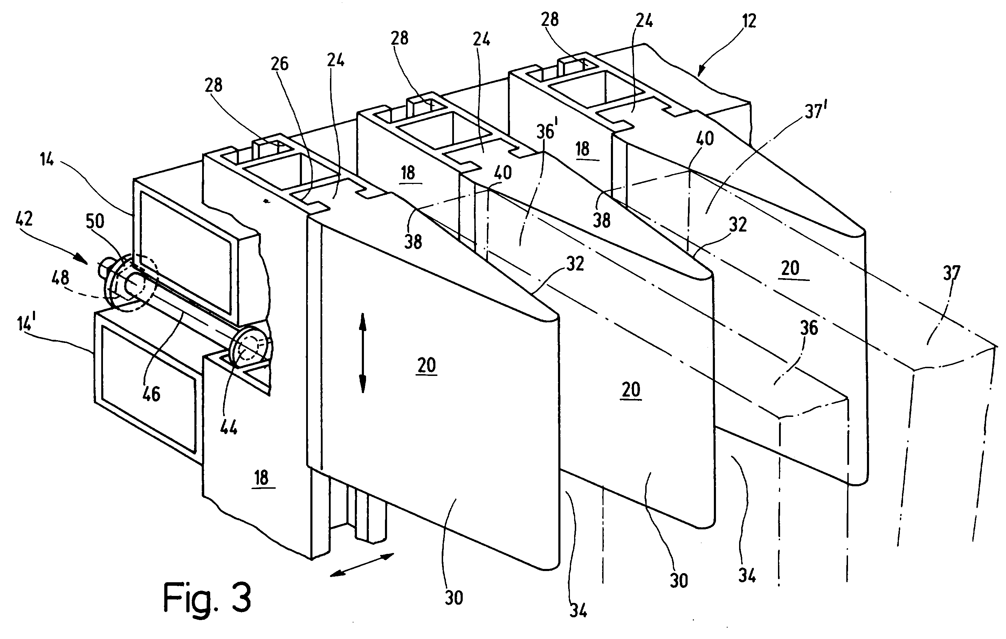

An den Befestigungsschienen 18 ist vorzugsweise an deren unterem und oberem Endbereich jeweils ein Abstandshalter 20 bzw. 22 in Hochrichtung stufenlos verstellbar und feststellbar vorgesehen. Die einzelnen einander benachbarten Abstandshalter 20 bzw. 22 sind jeweils im wesentlichen in der gleichen Horizontalebene positioniert und ragen senkrecht vom hinteren Gestellteil 12 nach vorne ab. Sie sind, wie Figur 3 zeigt, konstruktiv gleich ausgebildet. In Draufsicht betrachtet verjüngen sie sich spitzkeilförmig in Richtung auf ihr freies Ende zu. An ihrer Basis ist ein Gleitfuß 24 angeformt, der formschlüssig von einer T-Nut 26 der betreffenden Befestigungsschiene 18 verstellbar und feststellbar aufgenommen ist. Letztere ist vorzugsweise als Hohlprofil mit an dieses einander gegenüberliegend angeformten T-Nuten 26, 28 ausgeführt.

Die Seiten der Abstandshalter 20 bzw. 22 bilden ebene, vertikale Flächen 30, 32. Einander gegenüberliegende Flächen 30, 32 von benachbarten Abstandshaltern 20 definieren jeweils einen Platteneingriffsspalt 34, der sich von seiner offenen Spaltseite aus nach innen stetig verengt. Dadurch ist es möglich, einzelne auf den Boden 10 des Transportgestells hochkant aufzustellende Platten 36, 37 mit ihrem dem hinteren Gestellteil 12 zu gerichteten Plattenrandstück 36' bzw. 37' so weit in den Platteneingriffsspalt 34 hineinzuschieben, bis dasselbe mit seinen beiden vertikalen Außenkanten 38, 40 an den Schrägflächen 30, 32 von benachbarten Abstandshaltern 20 zur Anlage kommt. Somit haben die Platten 36, 37 zu ihrer kippsicheren Stabilisierung auf dem Transportgestell lediglich Linienberührung mit den Abstandshaltern 20, so daß, im Falle einer empfindlichen Plattenoberfläche, optimaler Oberflächenschutz gewährleistet ist. Zugleich lassen sich, wie die Platten 36 und 37 zeigen, solche unterschiedlichster Dicke ohne Änderung des gegenseitigen Abstandes der Abstandshalter 20 sichern. Hierbei ändert sich dann lediglich die Eingriffstiefe der Plattenrandstücke 36' bzw. 37'.

Alternativ zur erläuterten Konfiguration der Platteneingriffsspalte 34 könnten durch die Seitenflächen der Abstandshalter 20 auch solche Spalte vorgesehen sein, bei denen sich lediglich die eine Spaltwand schräg nach innen und die andere sich senkrecht von der hinteren Gestellwand 12 erstreckt. Auch in diesem Falle ließen sich Platten mit unterschiedlichen Dicken seitlich stabilisieren. Allerdings wäre eine derartige Spaltausbildung mehr für Plattenmaterial mit unempfindlicher Oberfläche geeignet.

Wie aus Figur 3 zu ersehen ist, sind die Befestigungsschienen 18 an den Aufnahmeleisten 14, 14' sowie 16, 16' mittels als Ganzes mit 42 bezeichneten Spannvorrichtungen festlegbar. Diese sind durch eine Spannschraube gebildet, deren Schraubenkopf 44 mit der T-Nut 28 der betreffenden Befestigungsschiene 18 in Eingriff gebracht ist. Der Schraubenschaft 46 erstreckt sich zwischen den beiden im Parallelabstand einander zugeordneten horizontalen Aufnahmeleisten 14, 14' bzw. 16, 16' hindurch und ist mit diesen über eine auf den Schraubenschaft 46 aufgeschraubte Spannmutter 48 lösbar verspannt, indem sich letztere über eine Zwischenscheibe 50 an beiden Aufnahmeleisten 14, 14' bzw. 16, 16' abstützt.

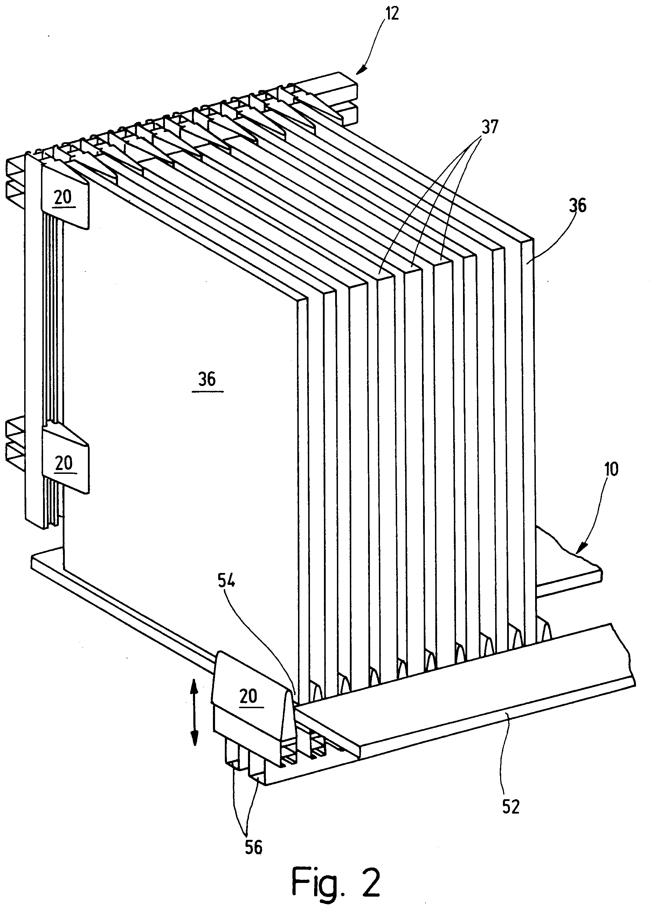

Wie Figur 2 zeigt, können zusätzlich zu den vorzugsweise in zwei horizontalen Reihen am hinteren Gestellteil 12 vorgesehenen Abstandshaltern 30 solche auch am Boden 10, insbesondere im Bereich seiner vorderen Bodenkante 52, vorgesehen sein, wodurch sich die Plattenstabilisierung auf dem Traggestell noch weiter wesentlich erhöhen läßt. Hierzu sind die Abstandshalter 20 derart positioniert, daß sich die durch sie definierten Platteneingriffsspalte 54 mit den ihnen zugeordneten Platteneingriffsspalten 34 in einer gemeinsamen Vertikalebene befinden. Diese sich nach oben erstreckenden Abstandshalter 20 sitzen auf einem gemeinsamen Träger 56, der vorzugsweise im Boden 10 derart versenkbar angeordnet ist, daß sich die Abstandshalter 20 in ihrer abgesenkten Stellung unterhalb der Bodenauflagefläche befinden. Diese Abstandshalter 20 sind somit beim Bestücken des Transportgestelles mit Plattenmaterial nicht hinderlich und greifen beim Aufwärtshub nachträglich zwischen dasselbe ein.

Das Transportgestell kann eine Palette bilden oder Teil eines Transportwagens sein.

## Patentansprüche

1. Vorrichtung zum seitlichen Abstützen von hochkant auf einem Boden (10) eines Transportgestells aufzustellenden Platten (36, 37), die oberhalb des Bodens (10) je Platte (36 bzw. 37) an einem aufrechten Gestellteil (12) wenigstens eine zum Boden (10) parallele Reihe von nebeneinander angeordneten und vom Gestellteil (12) abragenden Abstandshaltern (20) aufweist, zwischen deren im Abstand einander benachbarten, geradlinigen Seiten (30, 32) jeweils eine Platte (20) mit einem Plattenrandstück (36' bzw. 37') in Eingriff bringbar ist,
**dadurch gekennzeichnet, daß**
sich der Abstand der einander benachbarten, einen Platteneingriffsspalt (34) definierenden Seiten (30 32) der Abstandshalter (20), in Richtung auf den aufrechten Gestellteil (12) stetig verkleinert.

2. Vorrichtung nach Anspruch 1, dadurch gekennzeichnet, daß die einander benachbarten Seiten (30, 32) der Abstandshalter (20), in Platteneingriffsrichtung gesehen, jeweils schräg nach innen konvergieren.

3. Vorrichtung nach Anspruch 1 oder 2, dadurch gekennzeichnet, daß die einander benachbarten Seiten (30, 32) der Abstandshalter (20) eben ausgebildet und in vertikaler Ebene angeordnet sind.

4. Vorrichtung nach einem der vorhergehenden Ansprüche, dadurch gekennzeichnet, daß die Abstandshalter (20) jeweils einen in Draufsicht spitzwinkligen Abstützschenkel aufweisen, der mit seiner Basis (Gleitfuß 24) am aufrechten Gestellteil (12) gehalten ist.

5. Vorrichtung nach einem der vorhergehenden Ansprüche 1 bis 3, dadurch gekennzeichnet, daß die Abstandshalter U-förmig und deren U-Schenkel in Draufsicht spitzwinklig ausgebildet sind.

6. Vorrichtung nach Anspruch 4 oder 5, dadurch gekennzeichnet, daß das freie Ende der Abstütz- bzw. U-Schenkel abgerundet ist.

7. Vorrichtung nach einem der vorhergehenden Ansprüche, dadurch gekennzeichnet, daß die Abstandshalter (20) am aufrechten Gestellteil (12) sowohl in Hoch- als auch in Querrichtung verstellbar und feststellbar angeordnet sind.

8. Vorrichtung nach Anspruch 7, dadurch gekennzeichnet, daß die Abstandshalter (20) mit einem Gleitfuß (24) in jeweils einer Führungsnut (26) einer vertikal angeordneten Befestigungsschiene (18) verstellbar und feststellbar gehalten sind.

9. Vorrichtung nach Anspruch 8, dadurch gekennzeichnet, daß die Befestigungsschiene in horizontalen Aufnahmeleisten (14, 14' bzw. 16, 16') des aufrechten Gestellteils (12) in deren Längsrichtung verschiebbar und feststellbar angeordnet sind.

10. Vorrichtung nach Anspruch 9, dadurch gekennzeichnet, daß die Befestigungsschienen (18) an den Aufnahmeschienen (14, 14' bzw. 16, 16') mittels Spannschrauben (44, 46) festlegbar sind, die mit einem Schraubenkopf (44) mit einer Längsnut (28) der Befestigungsschiene (18) in Eingriff bringbar sind, sich mit ihrem Schraubenschaft (46) zwischen zwei im Abstand übereinander angeordneten Aufnahmeleisten (14, 14' bzw. 16, 16') hindurch erstrecken und über eine auf deren Schraubenschaft (46) aufschraubbare Spannmutter (48) an den Aufnahmeleisten (14, 14' bzw. 16, 16') verspannbar sind.

11. Vorrichtung nach einem der vorhergehenden Ansprüche, dadurch gekennzeichnet, daß die Befestigungsschienen im Bereich ihres oberen und unteren Endes am aufrechten Gestellteil (12) festlegbar sind.

12. Vorrichtung nach einem der vorhergehenden Ansprüche, dadurch gekennzeichnet, daß an den Befestigungsschienen (18) im Bereich ihres oberen und unteren Endes jeweils ein Abstandshalter (20) vorgesehen ist.

13. Vorrichtung nach einem der vorhergehenden Ansprüche, dadurch gekennzeichnet, daß in den die gestellseitigen Abstandshalter (20) aufnehmenden Vertikalebenen am Gestellboden (10) zusätzliche Abstandshalter (20) vorgesehen sind.

14. Vorrichtung nach Anspruch 13, dadurch gekennzeichnet, daß die bodenseitigen Abstandshalter (20) gemeinsam in eine unterhalb der Plattenabstellfläche des Bodens (10) liegende Ebene absenkbar sind.

15. Vorrichtung nach einem der vorhergehenden Ansprüche, dadurch gekennzeichnet, daß die Abstandshalter (20) aus Gummi oder gummiähnlichem Material bestehen.
